# EUROPÄISCHE PATENTSCHRIFT

(11) **EP 0 394 926 B1**
(45) Veröffentlichungstag und Bekanntmachung des Hinweises auf die Patenterteilung: **26.07.1995**
(21) Anmeldenummer: 90107667.9
(22) Anmeldetag: 23.04.1990
(51) Int. Cl.: B42D 15/02

(54) **Verfahren und Vorrichtung zum Aufbringen von Unterschriftsstreifen auf Ausweiskarten**
Method of and device for applying signature strips to identity cards
Procédé et dispositif d'application de bandes de signature sur des cartes d'identité

(30) Priorität: 25.04.1989 DE 3913604
(43) Veröffentlichungstag der Anmeldung: 31.10.1990
(73) Patentinhaber: GAO Gesellschaft für Automation und Organisation mbH, 81307 München (DE)
(72) Erfinder: Hoppe, Joachim, D-8000 München 80 (DE); Haghiri-Tehrani, Yahya, D-8000 München 40 (DE); Neumann, Eugen, D-8000 München 21 (DE)
(74) Vertreter: Klunker . Schmitt-Nilson . Hirsch

(56) Entgegenhaltungen:
- EP-A- 0 046 509
- EP-A- 0 156 618
- EP-A- 0 323 097
- FR-A- 1 301 091
- FR-A- 2 598 003
- GB-A- 1 029 819
- GB-A- 2 122 541
- NL-A- 6 713 333
- US-A- 3 224 917
- US-A- 3 651 312
- US-A- 3 902 955

## Beschreibung

Die vorliegende Erfindung bezieht sich auf ein Verfahren zum positionierten Aufbringen von flachen Stanzelementen auf die Oberfläche von Trägermaterial, insbesondere von Papier-Unterschriftsstreifen auf Kartendeckfolien, wobei die Elemente in Mehrfachnutzen vorliegen.

Wegen der hohen Fälschungssicherheit werden Ausweis- und Berechtigungskarten bevorzugt, bei denen die vor Manipulation zu schützenden Daten auf ein sogenanntes Karteninlett aufgebracht sind, welches zwischen zwei transparenten Deckfolien einkaschiert ist. Zur Erhöhung der Fälschungssicherheit weist das Karteninlett ein sicherheitstechnisch hochwertiges Druckbild auf sowie weitere Echtheitskennzeichen wie Wasserzeichen, Sicherheitsfäden etc.

Die Herstellung der Karten mittels bekannter Verfahren erfolgt überwiegend in Bogenform. Aus wirtschaftlichen Gründen werden möglichst großflächige Bogen verarbeitet, die in eine Vielzahl kartengroßer Einzelnutzen unterteilt sind. Die Nutzenanordnung ist vorzugsweise auf allen Bögen identisch. Die für den späteren Kartenverbund benötigten Papier- und Kunststoffbogen werden getrennt vorbereitet und vor dem Kaschierprozeß passergenau übereinander angeordnet. Soweit möglich, wird dieser Vorgang maschinell mit Bogenanlegern oder ähnlichen Maschinen durchgeführt. Die Papier- und Kunststofflagen werden in einer üblichen Kaschierpresse durch Druck- und Wärmeeinwirkung miteinander verbunden. Anschließend werden die einzelnen Karten aus dem Bogenmaterial herausgestanzt.

Die einzelne Karte besitzt häufig eine oder mehrere Schichten, die nur einen Teil der gesamten Kartenfläche bedecken. Ein typisches Beispiel hierfür stellt ein Unterschriftsstreifen dar, der sich als etwa zentimeterbreites Papierband quer über die Kartenoberfläche erstreckt. Entsprechend der nur teilweisen Flächendeckung werden aus dem zugehörigen Bogen die nicht benötigten Flächen herausgestanzt und entfernt. Damit der Bogen beim Ausstanzen nicht vollständig in Einzelelemente zerfällt, wird das Stanzbild so ausgelegt, daß die Elemente über Stege miteinander verbunden bleiben. Als Ergebnis erhält man einen sogenannten Gitterbogen.

Die Stanzöffnungen haben jedoch die unangenehme Eigenschaft, daß sie die Eigenstabilität des Bogens verringern. Je kleiner das Flächengewicht und je größer der Bogen ist, umso weiter ist die Stabilität herabgesetzt. Aufgrund der geringen Eigenstabilität neigt der Gitterbogen dazu, sich bei der Handhabung und beim Transport zu verwerfen oder einzureißen. Mit wachsender ausgestanzter Fläche nehmen die Handhabungsprobleme des Gitterbogens zu, so daß er schließlich nur noch in mühevoller Handarbeit zum Kartenverbund verarbeitet werden kann. Besonders nachteilig wirkt sich dies bei der Produktion hoher Stückzahlen aus, da die Verarbeitung der Gitterbogen hier einen kaum zu rationalisierenden Engpaß im Herstellungsprozeß darstellt.

Die Verwendung von Gitterbogen ist zudem immer nur dann möglich, wenn die Einzelelemente "randabfallend" sind, d.h. daß die Elemente mindestens bis zu einer Kante der Karte verlaufen müssen. Die Herstellung von Karten mit "randlosen" Elementen, die ohne Verbindung zum Rand inselförmig auf der Kartenoberfläche liegen, ist mittels Gitterbogen nicht möglich.

Zum Ausstanzen von neutralen Elementen ohne Aufdruck, bei denen ein registergenaues Arbeiten nicht erforderlich ist, ist in der EP 304 216 ein Verfahren beschrieben, bei dem zum Kennzeichnen eines defekten Reißverschlusses ein Klebeelement aus einem Endlosband ausgestanzt und dieses Element unmittelbar nach dem Stanzvorgang auf den defekten Reißverschluß aufgebracht wird.

Aus der EP 46 509 ist ein Verfahren bekannt, bei dem Klebeecken aus einem kontinuierlichen Folienband ausgeschnitten und in einem mehrstufigen Prozeß auf Albumblätter eines Fotoalbums übertragen werden. Hierzu werden die Fotoecken zunächst in zwei Schritten ausgeschnitten und anschließend vom Messerblock angesaugt und angehoben. Anschließend wird ein Albumblatt zwischen den Messerblock und das Folienband geführt. Die Folienecken werden dann durch Absenken des Messerblocks auf dem Blattträger übertragen und dort fixiert.

Zum Übertragen einer fotosensiblen Schicht auf eine Karte ist aus der FR 2 598 003 darüber hinaus ein Verfahren bekannt, bei dem aus einem Band die fotosensible Schicht ausgestanzt wird. Das ausgestanzte Element wird anschließend vom Stanzstempel angesaugt und der Stanzstempel zusammen mit dem angesaugten Element zu einer weiteren Bearbeitungsstation gefahren, in der das Element vom Stanzstempel gelöst und auf die Karte übertragen wird.

Aufgabe der Erfindung ist es, ein maschinelles und somit rationalisierbares Verfahren zu nennen, das ein genaues und fehlerfreies positioniertes Aufbringen von flachen Elementen auf die Oberfläche eines Trägermaterials gestattet. Darüber hinaus sollen das Verfahren und die Vorrichtung in bestehende Fertigungseinrichtungen, wie sie in Druckbetrieben häufig anzutreffen sind, integrierbar sein.

Eine weitere Aufgabe ist es auch, das maschinelle Verfahren so zu gestalten, daß es sowohl zum Aufbringen von randlosen wie randabfallenden Elementen geeignet ist.

Die Aufgaben werden durch die im Kennzeichen des Anspruchs 1 enthaltenen Merkmale gelöst. Vorteilhafte Weiterbildungen ergeben sich aus den unter- und nebengeordneten Ansprüchen.

Der Kern der Erfindung ist darin zu sehen, daß während des Stanzvorgangs die Elemente in einer vorbestimmten Position fixiert werden, und daß diese Fixierung erst dann wieder aufgehoben wird, nachdem die Einzelelemente mit einem Trägermaterial paßgerecht und dauerhaft verbunden sind. Im Gegensatz zur klassischen Etikettenstanzung wird der Träger (Kartenfolie) erfindungsgemäß nicht in den Stanzvorgang mit einbezogen, so daß dieser völlig unbeschädigt bleibt. Die Zuordnung der Stanzelemente zum Träger (Kartenfolie) erfolgt somit stets nach dem Stanzvorgang.

Im einzelnen gliedert sich die Erfindung in folgende Verfahrensschritte:
- Zuführen der Mehrfachnutzen in eine Stanzeinrichtung und Positionieren im Stanzbett,
- Stanzen der Elemente und Fixieren in ihrer Position,
- Zuführen eines Trägermaterials und Ausrichten zu den fixierten Elementen,
- Verbinden der Elemente mit dem Träger und
- Entnehmen des Verbundmaterials.

Je nach verwendeten Materialformen und Maschinentypen läßt sich das erfindungsgemäße Verfahren in verschiedene Varianten unterteilen, davon werden drei im folgenden Text beschrieben.

### Variante I

Die erste Variante besitzt als wesentliches Merkmal, daß die Verfahrensschritte des Stanzens, Fixierens und Verbindens in einem einzigen, speziell ausgelegten Bett durchgeführt werden. Hierbei wird das Stanzgut, das als Rollen- oder Bogenmaterial vorliegen kann, dem Bett einer Stanzeinrichtung zugeführt und dort positioniert. Erfindungsgemäß werden die Elemente während des Stanzvorgangs im Stanzbett in ihrer ursprünglichen Nutzenanordnung festgehalten. Möglichkeiten hierfür bieten beispielsweise die Ausrüstung des Stanzbetts mit einer Vakuumsauganlage, die die Elemente durch Unterdruck ansaugt oder die Konturierung des Stanzbetts entsprechend der Lage und Ausdehnung der Elemente. Nach dem Stanzen und der Entsorgung des Verschnitts wird zum paßgerechten Verbinden dem Stanzbett ein Trägermaterial zugeführt und registergenau zu den gestanzten Elementen ausgerichtet. Nachdem mittels geeigneter Klebetechniken eine dauerhafte Verbindung zwischen den Materialien hergestellt ist, wird die Fixierung gelöst; der fertige Verbundbogen kann nun maschinell entnommen und verarbeitet werden.

### Variante II

Das Merkmal der zweiten Variante besteht darin, daß nach dem Stanzen die Elemente zur Durchführung von nachfolgenden Verfahrensschritten auf ein weiteres Bett übertragen werden. Spezielle Handhabungseinrichtungen gewährleisten ein positioniertes Ablegen auf dem zweiten Bett. Als Vorteil ergibt sich, daß das Registerbild des Stanzguts hierbei nicht identisch zum Register des Trägermaterial sein muß. Vorzugsweise wird es so ausgelegt, daß die Elemente mit möglichst geringem Zwischenraum angeordnet sind und somit der Verschnitt minimal ist.

Zur Durchführung des Verfahrens werden die Elemente in einer Stanzeinrichtung einzeln oder in kleinen Gruppen aus dem Mehrfachnutzen herausgestanzt und in ihrer ursprünglichen Nutzenlage zum Stanzbett fixiert. Das paßgerechte Zusammenführen von Elementen und Trägermaterial erfolgt in einem Zwischenschritt mit Handhabungsautomaten. Diese führen den Träger und die Elemente mittels Positionssteuerungen so zusammen, daß sie anschließend registergenau übereinander liegen. Nach dem jeweiligen Verbinden der Materialien kann das Verbundmaterial entnommen und weiterverarbeitet werden.

### Variante III

Diese Variante beschreibt die Durchführung des Verfahrens auf einer modifizierten Rollenstanzmaschine, die um verschiedene Materialanleger und -ableger sowie Einrichtung zum Verbinden der Materialien erweitert ist. Die Verwendung von Rollenmaschinen macht das Verfahren besonders zur Verarbeitung von Materialbahnen. Sowohl der Träger wie auch das Stanzgut werden in identischer Nutzenanordnung bedruckt. Das Druckbild des Stanzguts wird vorzugsweise so ausgelegt, daß der Verschnitt eine zusammenhängende Gitterbahn bildet. Zur Durchführung wird das Stanzgut registergenau der aus Messerwalze und Gegendruckrolle bestehenden Stanzeinrichtung zugeführt. Nach dem Stanzen wird der Verschnitt als zusammenhängende Gitterbahn abgezogen, während die auf der Gegendruckrolle fixierten Elemente auf die Verbindungseinrichtung zulaufen. Hier wird das Trägermaterial registergenau auf die Elemente aufgelegt und mit ihnen verklebt. Anschließend wird die Fixierung gelöst und die Verbundbahn von der Stanzeinrichtung abgezogen.

Die drei beschriebenen Varianten haben prinzipielle Ausführungsformen des Verfahrens vorgestellt, die eine Vielzahl von konkreten Beispielen einschließen. Trotzdem erhebt diese Dreigliederung keinen Anspruch auf Vollständigkeit. Vielmehr wird der Fachmann mittels der angegebenen Verfahrensschritte in die Lage versetzt, Mischformen oder andere Varianten zu wählen, die auf dem erfindungsgemäßen Verfahren aufbauend auch dessen Vorteile nutzbar machen.

In den Beschreibungen der Varianten deutet sich bereits an, daß das Verfahren weitgehend unabhängig vom Typ der verwendeten Stanzmaschine ist, es kann sowohl auf einer Flachbettstanze, wie auf einer Rollenstanzmaschine als auch auf Mischformen von Rollen- und Flachbettmaschinen durchgeführt werden. Wesentlich ist nur, daß die gestanzten Elemente in ihrer Position fixierbar sind.

Zur Fixierung der Elemente auf dem Stanzbett stehen verschiedene Methoden zur Auswahl. Eine bereits erwähnte Methode ist die Vakuum-Fixierung. Das Stanzbett besitzt entsprechend der Nutzenanordnung der Elemente eine Vielzahl von Kanälen, die bis unter das Stanzgut reichen. Durch Unterdruck werden die Elemente angesaugt und auf dem Stanzbett jeweils für sich festgehalten.

Eine weitere Fixiermethode besteht darin, das Stanzbett mit Konturen oder Öffnungen zu versehen, die die ausgestanzen Elemente halten oder führen. Besonders vorteilhaft ist es, das Stanzbett in zwei Bauteile zu unterteilen, erstens in eine durchbrochene Gegendruckplatte, die das Stanzgut aufnimmt und zweitens in einen darunter angeordneten Klebetisch, in den das Trägermaterial eingelegt wird. Die Durchbrüche der Gegendruckplatte entsprechen in ihrer Lage und Form der Anordnung der Elemente auf dem Stanzgut und reichen bis zum Klebetisch. Beim Stanzen schneidet ein Durchschiebestempel die Elemente heraus und drückt sie durch die Durchbrüche, die die Elemente zugleich positionsgerecht führen, hindurch auf das Trägermaterial, wo dann auch die Verbindung hergestellt wird.

Je nach Material und fertigungstechnischen Gesichtspunkten kann das Verbinden zwischen dem Träger und den Elementen auf verschiedene Weisen erfolgen. Bei einer Materialpaarung wie Papier und thermoplastischer Kunststoffträger ist eine sogenannte Thermofixierung vorteilhaft. Hierbei wird der Träger kurzzeitig über seinen Festpunkt erwärmt und mit der Papierlage in Kontakt gebracht. Das plastische Material dringt in das Papiergewebe ein, beim Abkühlen verfestigt sich der Kunststoff wieder und bindet den Papierstreifen an den Träger.

Zur Erwärmung des Träger stehen verschiedene Möglichkeiten offen, wie Beheizen des Durchschiebestempels, Aufdrücken oder Durchstechen mit heißen Nadeln etc.. Vorzugsweise erfolgt die Erwärmung des Trägers nur punktuell, da somit ein Verziehen oder großflächiges Fließen des Trägers unterbunden wird.

Eine vorteilhafte Klebetechnik ist die Verwendung von Materialien, die mit einer thermisch aktivierbaren Klebeschicht versehen sind (sogenannte Heißklebe-Schichten). Dieses Material läßt sich in kaltem Zustand wie normales Papier oder Folie den Bearbeitungsstationen zuführen. Erst dann, wenn die Elemente und der Träger paßgerecht übereinanderliegen, erfolgt die Verbindung der Materialien durch Erwärmung.

Selbstverständlich lassen sich auch klassische Klebetechniken einsetzen, wo zum Verbinden der Teile in einem Zwischenschritt auf den Träger und/oder die Elemente ein Klebstoff aufgetragen wird.

Besonders vorteilhaft kann im Rahmen der Erfindung auch ein sogenanntes Ultraschall-Schweißaggregat eingesetzt werden, um die positionierten Elemente mit dem Träger zu verbinden.

Generell ist bei allen Verbindungstechniken darauf zu achten, daß zum Zeitpunkt der Freigabe der Positionsfixierung die Elemente ausreichend fest auf dem Trägermaterial haften.

Ein wesentlicher Vorteil des neuen Verfahrens besteht darin, daß die separate Handhabung von Gitterbogen oder Einzelelementen entfällt, wodurch man sich beträchtliche fertigungstechnische Probleme erspart. Unabhängig von der Größe der Ausstanzungen und der Form der Elemente können sämtliche Verfahrensschritte maschinell durchgeführt werden. Man ist somit in der Lage, angefangen vom Bedrucken über das Zusammenführen, Kaschieren bis zum Ausstanzen der Karten eine vollautomatische Fertigungsstraße zu erstellen, um Produktionsengpässe zu vermeiden.

Ein weiterer Vorteil des neuen Verfahrens besteht in der problemlosen Einbeziehung zusätzlicher Arbeitsschritte in das Verfahren. So lassen sich zwischen dem Stanzen und Verbinden im Prinzip beliebig viele weitere Schritte einfügen. Voraussetzung hierfür ist allerdings, daß die Positionsfixierung der Elemente nicht aufgegeben wird. Solche zusätzlichen Arbeitsschritte können beispielsweise das Auftragen einer Klebeschicht auf den Elementen, das Aufdrucken von Kennzeichen etc. sein.

Bei dem bekannten Verfahren ist die Plazierungsgenauigkeit der Elemente auf der Kartenoberfläche dadurch bestimmt, wie genau der instabile Gitterbogen zu den anderen Lagen ausgerichtet werden kann. Aufgrund der problembehafteten Handhabung des Gitterbogens liegen die Toleranzen im Bereich von einigen Millimetern. Beim erfindungsgemäßen Verfahren dagegen sind die Plazierungstoleranzen vorgegeben durch die Einhaltung der Registerlage auf den Materialien und durch die Positioniergenauigkeit der Maschinen. Sowohl die drucktechnischen als auch die Maschinentoleranzen betragen, ohne daß allzu großer Aufwand getrieben wird, gewöhnlich wenige 1/10 Millimeter. Mit annähernd gleicher Genauigkeit sind nun die Elemente auf einer nach dem neuen Verfahren fertiggestellten Karte plaziert. Hieraus resultiert ein einheitliches Aussehen der Karten.

Mit den bekannten Verfahren lassen sich, da Gitterbögen verwendet werden müssen, lediglich Karten mit randabfallenden Elementen herstellen, wodurch man in der Gestaltung des Kartenbilds eingeschränkt ist. Das erfindungsgemäße Verfahren dagegen erweitert die gestalterischen Möglichkeiten erheblich, da es nicht erforderlich ist, zwischen den Elementen Verbindungsstege vorzusehen. Durch eine entsprechende geometrische Auslegung der Fixiervorrichtung lassen sich auf dem Stanzbett Elemente festhalten, die keine Verbindungen zu ihren Nachbarn aufweisen. Dadurch ist man in der Lage, auch randlose Elemente auf der Karte aufzubringen. Das Kartendesign braucht sich deshalb weniger an der Fertigungstechnik auszurichten, sondern kann sich an zweckmäßigen oder gestalterischen Gesichtspunkten orientieren.

Das erfindungsgemäße Verfahren hat den Vorteil einer flexiblen Anpassung an die fertigungstechnische Umgebung, so besteht eine große Variationsbreite in der Auswahl, der Gruppierung und dem Einfügen von Maschinen und Fertigungsschritten. Der Anwender ist somit in der Lage, sich einen optimalen Fertigungsablauf zu erstellen.

Bei der Anwendung des Verfahrens zur Plazierung von Unterschriftsstreifen auf Ausweiskarten werden die ausgestanzten Elemente üblicherweise auf die Oberfläche von Karten aufgebracht, wobei sie unter Wärme- und Druckeinwirkung in die thermoplastische Deckfolie eingebettet werden. Dies kann insofern zu Problemen führen, da das Einbetten des Unterschriftsstreifens eine Materialverdrängung des Kartenmaterials zur Folge hat. Derartige Materialverdrängungen können Druckbildverzüge und Sollbruchstellen an den Einbettungskanten verursachen. Die Probleme lassen sich vermeiden, wenn man auf die Oberfläche zusätzlich eine Ausgleichsfolie aufbringt, die eine Aussparung in Elementform besitzt und die Dicke des Elements aufweist. Das erfindungsgemäße Verfahren ermöglicht es, zusammen mit der Ausstanzung der Elemente in einem Arbeitsgang aus einer Dickenausgleichsfolie Aussparungen herauszustanzen. Da beide Materialien (Elementbogen und Ausgleichsfolie) in einem Arbeitsgang mit einem gemeinsamen Werkzeug gestanzt werden, sind die Aussparungen automatisch formschlüssig zu den Elementen und liegen im Register dazu. Mit Hilfe dieser Verfahrensvariante lassen sich Karten mit stufenlos ebener Oberfläche erzeugen, wobei die genannten Nachteile vermieden werden.

Neben der genannten Vorgehensweise kann das erfindungsgemäße Verfahren auch eingesetzt werden, um flache Stanzelemente, wie beispielsweise U-Streifen, auf fertig laminierte Karten oder ähnliche Träger aufzubringen. Diese Vorgehensweise hat den Vorteil, daß die obengenannten, mit der Materialverdrängung des Trägers verbundenen Probleme erst gar nicht auftreten. Andererseits hat aber diese Vorgehensweise zur Folge, daß der Unterschriftsstreifen mit deutlichem Dickenunterschied auf der Oberfläche der Karte aufliegt, was bei der täglichen Handhabung zu Kantenbeschädigungen des Papierstreifens und bei vielen gerätetechnischen Nutzungen zu Störungen führt.

Zur Lösung des Problems wird vorgeschlagen, den Papierstreifen derart in das Kartenmaterial einzubetten, daß sich ein weicher Übergang zwischen der Papieroberfläche und der Oberfläche der Karte ergibt. Vorzugsweise wird zur Einbettung ein Stempel, beispielsweise ein Ultraschallstempel, eingesetzt, der die Kontur des Papierstreifens hat. Das durch die Einwirkung von Ultraschall erweichende Kartenmaterial wird durch den Stempelandruck aus dem Bereich unter dem Unterschriftsstreifen verdrängt und durch geeignete Formelemente in der Umgebung des Stempels derart kanalisiert, daß in den Randzonen des Unterschriftsstreifens eine Materialverdickung entsteht, die einen weichen Übergang vom Unterschriftsstreifen zur Kartenoberfläche schafft.

Bei den vorher erwähnten Varianten I, II und III werden die Elemente, beispielsweise Unterschriftsstreifen, in einer Stanzeinrichtung, in der sie auch positioniert werden, aus Rollen- oder Bogenmaterial herausgetrennt.

Gemäß einem anderen, auch die der Erfindung zugrundeliegende Aufgabe lösenden Verfahren wird das Rollen-oder Bogenmaterial derart vorgestanzt, daß die Elemente lediglich noch über schmale Stege mit dem Bogenmaterial verbunden sind. In der Vorrichtung zur Aufbringung der Elemente auf das Trägermaterial werden die Elemente dann lediglich aus dem Bogen herausgetrennt und vergleichbar den geschilderten Verfahren registergenau auf das Trägermaterial übertragen. Bei dieser Vorgehensweise kann der Stanzvorgang, der gerade bei sehr dünnem Bogenmaterial aufwendig werden kann, in speziellen hochwertigen Stanzeinrichtungen, unabhängig von der Vorrichtung zum Aufbringen der Elemente, auf Trägermaterial durchgeführt werden.

Weitere Vorteile ergeben sich aus den anhand der Figuren beschriebenen Ausführungsbeispielen.

Es zeigen:
- Fig. 1: eine Ausweiskarte mit einem randabfallenden, in Randlage aufgebrachten Unterschriftsstreifen, Unterschriftsstreifen,
- Fig. 2: eine Ausweiskarte mit randlosen Elementen,
- Fig. 3: einen Gitterbogen, wie er zur Herstellung von Karten mit randabfallenden Elementen verwendet wird,
- Fig. 4: eine schematische Darstellung des Verfahrensablaufs unter Verwendung eines Durchschiebestempels in Aufsicht,
- Fig. 5: eine schematische Darstellung einer Stanzeinrichtung mit Durchschiebestempel im Aufriß,
- Fig. 6: eine schematische Darstellung eines Stanzbetts mit einer Vakuumfixier-Einrichtung,
- Fig. 7: eine schematische Darstellung des Verfahrensablaufs unter Verwendung eines zirkulierenden Stanzbetts,
- Fig. 8: eine schematische Darstellung einer Vorrichtung zum Stanzen und Verbinden von Rollenmaterial auf einer Flachbettstanze,
- Fig. 9: eine schematische Darstellung des Verfahrensablaufs unter Verwendung eines Transfer-Automatens,
- Fig. 10: eine schematische Darstellung einer Vorrichtung zum Transfer des Stanzguts zwischen zwei Bearbeitungsmaschinen,
- Fig. 11: eine schematische Darstellung einer Vorrichtung zum Verarbeiten von Rollenmaterial auf einer Rollenstanzmaschine,
- Fig. 12: ein Schnittbild einer kaschierten Karte mit einem randlosen Element und einer Dickenausgleichsfolie,
- Fig. 13: Verfahrensschritte und Vorrichtungen für ein passergenaues Stanzen und registergenaues Positionieren der Ausgleichsfolie zu den Elementen,
- Fig. 14: eine schematische Darstellung einer Vorrichtung zur Verarbeitung von vorgestanztem Bogenmaterial,
- Fig. 15: eine fertig laminierte Karte mit eingebettetem Stanzelement,
- Fig. 16a, 16b: eine fertig laminierte Karte vor und nach dem Einsetzen eines Stanzelements,
- Fig. 17a, 17b: eine fertig laminierte Karte mit auffixiertem Stanzelement, dessen Ränder abgesenkt sind,
- Fig. 18: eine fertig laminierte Karte mit einem Zusatzelement im Randbereich des Stanzelements.

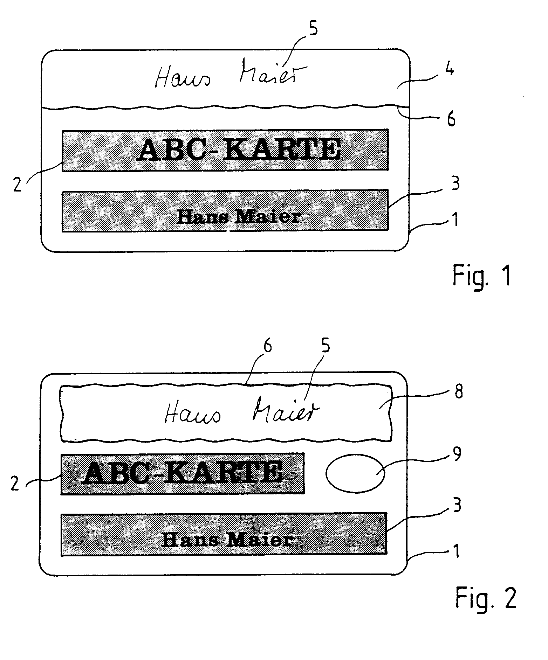

Die Fig. 1 zeigt ein Beispiel einer Ausweiskarte 1, das Karteninlett ist zwischen zwei transparenten Deckschichten einkaschiert. Das Inlett trägt neben den Standarddaten 2 noch einen Satz individueller Daten 3, die durch die Deckschichten vor Manipulation geschützt sind. Das Einzelelement 4 ist als Unterschriftsstreifen aufgebracht, auf dem die Karteninhaber ihre Unterschriften 5 ausführen. Der Unterschriftsstreifen 4 ist in einer oberen Randlage aufgebracht und verläuft entlang einer Längskante, die zur Gitterbildung ausgenutzt wird. Der Unterschriftsstreifen weist einen individuellen Wellenschnitt 6 auf, der ein unberechtigtes Übertragen der Streifen auf eine andere Karte erschwert.

Fig. 2 zeigt als weiteres Beispiel eine Karte 1, die zwei randlose Elemente 8 und 9 aufweist. Das Element 8 ist als Papier-Unterschriftsstreifen ausgebildet, das Element 9 stellt beispielsweise ein Logo oder ein Sicherheitsmerkmal wie ein Hologramm dar.

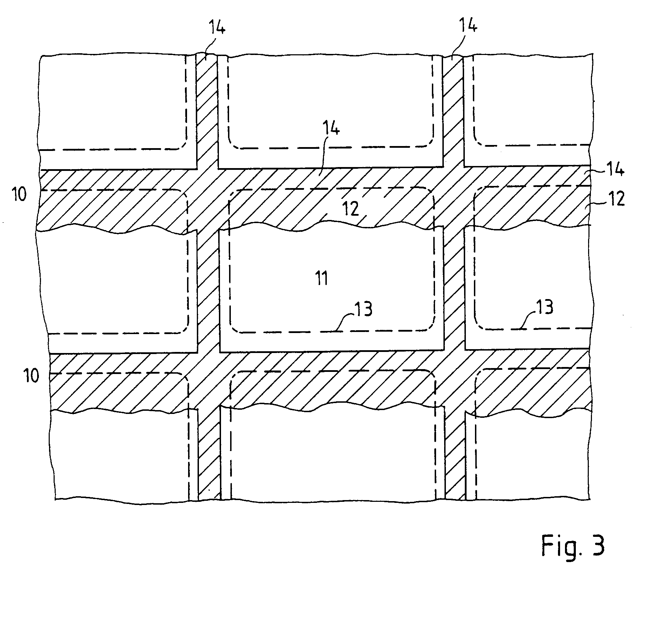

Fig. 3 zeigt einen Ausschnitt eines Gitterbogens 10, wie er nach dem Stand der Technik zur Herstellung von Karten mit randabfallenden Elementen gemäß Fig. 1 verwendet wird. Der Bogen 10 trägt eine zu den anderen Schichten des Kartenverbunds identische Nutzenanordnung. Aus dem Bogen sind diejenigen Flächen 11 herausgestanzt, die auf der späteren Karte frei bleiben. Die Randlage des Elements ermöglicht es, das Stanzbild so zu gestalten, daß die Elemente 12 über Verbindungsstege 14 miteinander verbunden bleiben. Zur Herstellung der Karte werden der Gitterbogen und die weiteren Bogen wie Deckfolien, Inlett usw registergenau übereinandergelegt und einer Kaschierpresse zugeführt, wo sie unter Druck und Wärme miteinander verbunden werden. Die einzelne Karte erhält man durch Stanzen des Verbundbogens entlang des Kartenumrisses 13.

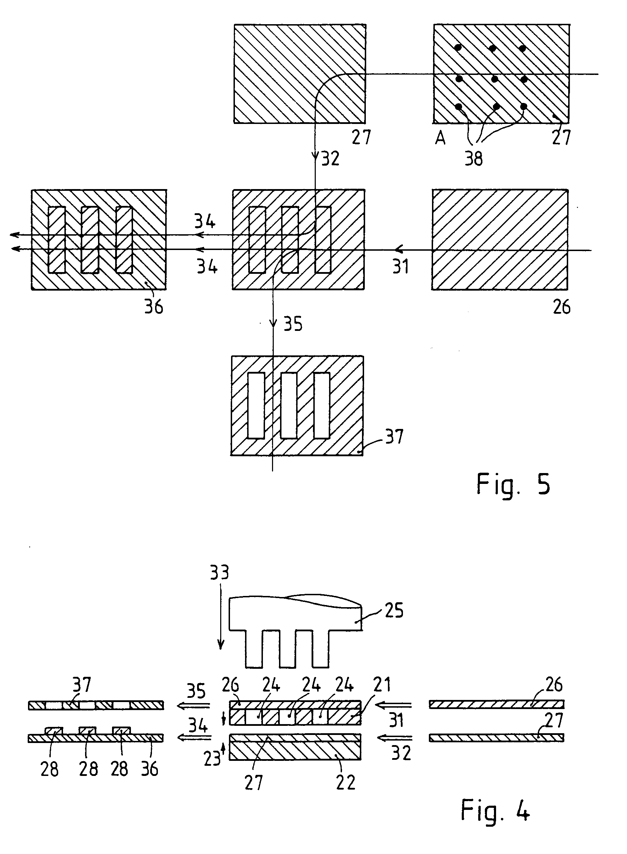

Ausführungsformen zur Variante I sind in den Fig. 4 bis 7 dargestellt.

In einer ersten Ausführungsform des erfindungsgemäßen Verfahrens ist in Fig. 4 eine Lösung gezeigt, die mit einer Flachbettstanze arbeitet. Die besondere Gestaltung des Stanzstempels 25 und des Stanzbetts 21, 22 ermöglichen das Schneiden, das Positionieren und das Verbinden der Elemente mit einem Trägermaterial in einem Arbeitstakt. Die beschriebene Anordnung eignet sich insbesondere für Materialpaarungen, die sich durch Druck und/oder Temperatur verbinden lassen.

Das Stanzbett ist in diesem Fall zweigeteilt und besteht aus einer Gegendruckplatte 21 und einem Klebetisch 22. Die beiden Bauteile sind übereinander angeordnet, der freie Abstand 23 zwischen dem Tisch 22 und der Platte 21 liegt vorzugsweise im Bereich von Millimetern und ist so bemessen, daß ein problemloses Einschieben und Entnehmen von Materialbogen möglich ist. Die Gegendruckplatte 21, in die das Stanzgut 26 eingelegt wird, besitzt entsprechend der Anzahl, der Lage und der Ausdehnung der Elemente 28 auf dem Bogen Durchbrüche 24. Der Klebetisch, in den das Trägermaterial eingelegt wird, dient als Widerlager beim Verbinden der Materialien. Der Durchschiebestempel 25 ist paßgerecht zu den Durchbrüchen 24 gefertigt und dient zum Ausstanzen der Elemente 28. Zusätzlich ist der Stempel 25 mit nicht dargestellten Vorrichtungen wie beispielsweise einer elektrischen Widerstandsheizung ausgerüstet und kann somit auch zur Thermofixierung der Elemente 28 auf dem Träger 27 eingesetzt werden.

Um den Verfahrensablauf zu verdeutlichen, sind in den Figuren 4 und 5 der Materialfluß und die Verfahrensschritte mit Pfeilen gekennzeichnet. Zu Verfahrensbeginn werden das Stanzgut 26 und das Trägermaterial 27 mittels zweier nicht dargestellter Bogenanleger in das zweigeteilte Stanzbett eingelegt (Pfeil 31 und 32). Nicht dargestellte Positioniereinrichtungen wie beispielsweise Anschlagleisten oder andere in der Drucktechnik bekannte Einrichtungen sorgen für eine registergenaue Ausrichtung der beiden Bogen 26 und 27. Der Durchschiebestempel 25 steht während des Einlegens in seiner oberen Position über der Gegendruckplatte 21. Nachdem die Bogen 26, 27 ausgerichtet sind, fährt der Stempel auf die Gegendruckplatte 21 zu (Pfeil 33), stanzt die Elemente 28 aus dem Bogen 26 heraus und drückt sie durch die Durchbrüche 24 auf das Trägermaterial 27. Hierbei sind die Elemente 28 durch Kontur der Durchbrüche geführt und werden somit in einer definierten Position auf dem Träger 27 abgelegt. In seiner unteren Position bleibt der beheizbare Stempel 25 für eine bestimmte Zeitspanne auf dem Stanzgut ruhen, unter dem Druck und der Wärme des Stempels 25 verbindet sich die Trägerfolie 27 mit den Elementen 28. Die Temperaturhöhe, der zeitliche Temperaturverlauf und die Verweildauer des Stempels sind dabei so eingestellt, daß eine ausreichende Verbindung der Materialien gesichert ist. Nach dem Zurückziehen des Stempels entnehmen nicht dargestellte Abstapler (Pfeil 34 und 35) Verbundbogen 36 sowie den Verschnitt 37.

Die vorgestellte Lösung läßt sich natürlich auch im Zusammenhang mit anderen Verbindungstechniken einsetzen. So können beispielsweise in einer zusätzlichen Station A vor dem Zuführen der Bogen Stoffe 38 wie ein Haftvermittler, eine Grundierung, ein Klebstoff etc aufgetragen werden, je nach Klebstoff reicht der Druck des Stempels auf die ELemente aus, um sie mit dem Träger zu verbinden.

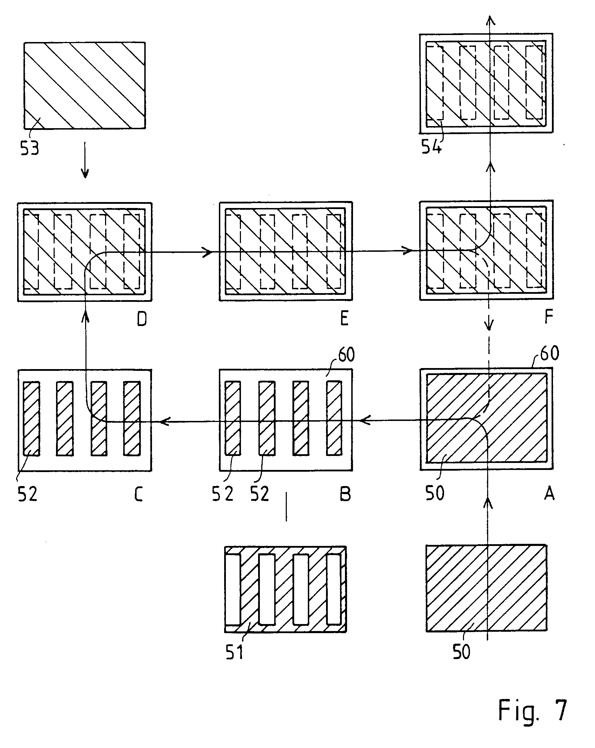

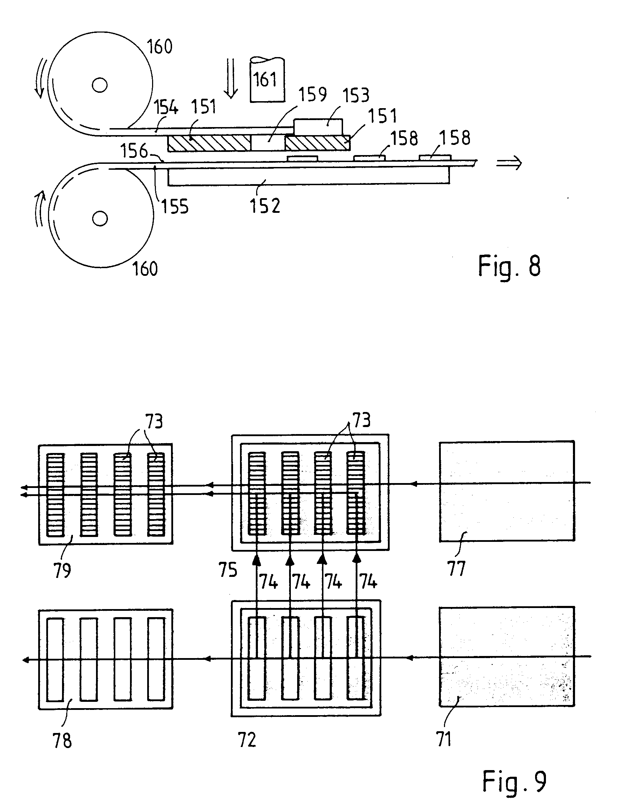

In einem zweiten Ausführungsbeispiel, gezeigt in den Fig. 7 und 8, zur Variante I ist das Stanzbett als verschiebbarer Schlitten ausgebildet, der das Stanzgut zu den einzelnen Verarbeitungsstationen transportiert. Die Fixierung, die mit einer Vakuumsauganlage erfolgt, wird soweit notwendig permanent aufrecht erhalten.

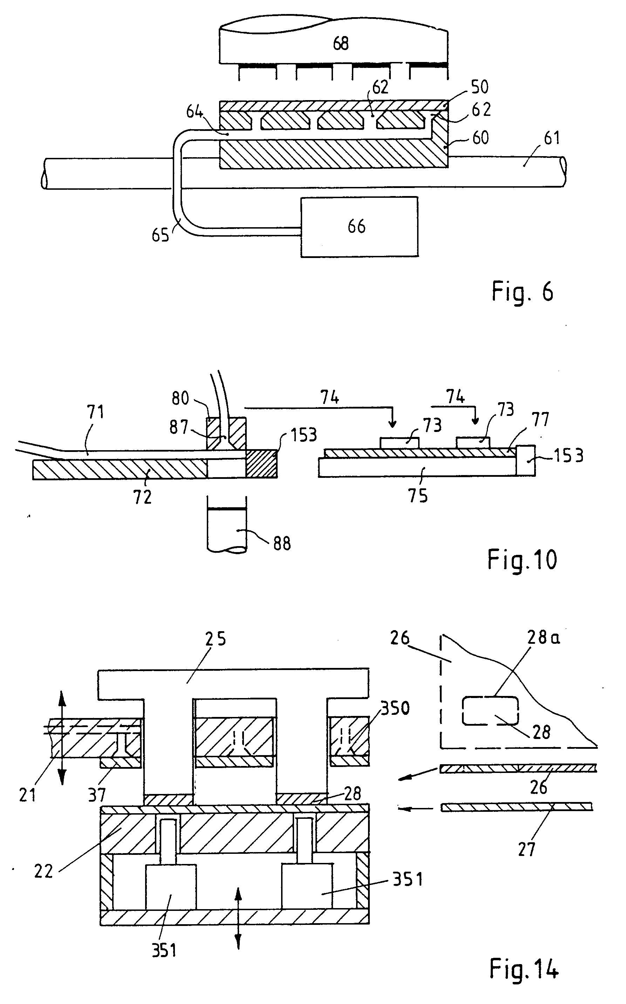

In Fig. 6 ist eine schematische Darstellung eines mit einer Vakuumsauganlage ausgerüsteten Stanzbetts 60 gezeigt. Das Bett ist auf Längsführungen 61 zwischen den einzelnen Stationen verschiebbar und kann in diesen in vorbestimmten Positionen angehalten werden. Zum Fixieren der Elemente besitzt das Bett 60 eine Anzahl von Ansaugöffnungen 62, ihre Anordnung entspricht der Nutzenlage der auszustanzenden Elemente auf dem Stanzgut 50. Unter jedem Element befindet sich dabei mindestens eine Saugöffnung 62. Die Saugöffnungen 62, die über Kanäle 64 und flexible Rohrleitungen 65 mit einer Vakuumanlage 66 verbunden sind, werden zu Beginn des Stanzvorgangs aktiviert. Der entstehende Unterdruck saugt das eingelegte Stanzgut 50 an und hält anfangs den Bogen und später die Einzelelemente 28 auch nach dem Zurückziehen des Stempels 68 in ihrer ursprünglichen Ruhelage fest.

Der Verfahrensablauf unter Verwendung des verschiebbaren Stanzbetts ist schematisch in der Fig. 7 dargestellt. Der Weg des Stanzbetts und der Materialfluß sind mit Pfeilen symbolisiert. Zu Beginn des Verfahrenszyklus befindet sich das in Fig. 6 dargestellte Stanzbett 60 am Ort A einer Stanzeinrichtung.

Bei oben stehenden Hubstempel 68 wird das Stanzgut 50 über einen nicht dargestellten Bogenanleger in das Bett 60 eingelegt und mittels nicht dargestellter Positioniereinrichtungen ausgerichtet und durch die Sauger 62 fixiert. Anschließend werden die Elemente 52 aus dem Bogen herausgeschnitten.

Danach wird das Bett 60 von der Position A über Transporteinrichtungen 61 an eine oder mehrere nachfolgende Bearbeitungsstationen B bis F weitergereicht. Der Unterdruck wird auch beim Transport des Stanzbetts und während der nachfolgenden Verarbeitungsschritte mindestens solange aufrecht erhalten, bis die Einzelelemente und das Trägermaterial 53 zueinander ausgerichtet und ausreichend miteinander verbunden sind. Je nach Fertigungsablauf durchläuft das Stanzbett verschiedene Stationen. Die in der Fig. 8 dargestellten Verfahrensschritte bestehen aus
a) einer Entsorgungsstation B, die den Verschnitt 51 entnimmt,
b) einer Auftragsstation C, in der beispielsweise ein Haftvermittler aufgetragen wird,
c) einem weiteren Bogenanleger D, der eine Trägerfolie 53 auf die gestanzten Elemente 52 registergenau auflegt,
d) einer Klebestation E, in der die Elemente 52 beispielsweise mittels Thermofixierung auf dem Träger 53 angeheftet werden und
e) einem Abstapler F, der nach dem Abschalten des Unterdrucks und Belüften der Ansaugkanäle 62 den Verbundbogen 54 entnimmt.

Eine dritte Ausführungsform der Variante II ist in Fig. 8 dargestellt. In diesem Beispiel wird Rollenmaterial 160 in einer Flachbettstanze verarbeitet. Das Stanzbett ist in diesem Fall zweigeteilt und besteht aus einer durchbrochenen Gegendruckplatte 151 und einem darunterliegenden Klebetisch 152. Das Stanzgut 154 wird der Gegendruckplatte 151 zugeführt und durch Anfahren an Anschläge 153 in Längs- und Querrichtung positioniert. Die Trägerbahn 155 wird in den Spalt 156 zwischen Gegendruckplatte 151 und Klebetisch 152 eingeführt. Die Spalthöhe wird vorzugsweise nur geringfügig höher als die Dicke der beiden Bahnen gewählt. Ein nicht dargestellter Registerregler gewährleistet eine registergenaue Lage der Trägerbahn 155 zum Stanzgut 154. Zum Stanzen und Fixieren fährt ein Stempel 161 auf die Gegendruckplatte zu, stanzt ein Element 158 heraus und schiebt es durch den Durchbruch 159 auf das Trägermaterial 155, wobei das Element durch die Ränder des Durchbruchs 159 geführt wird. Das Verbinden des Elements 158 mit dem Träger 155 kann auf bereits beschriebene Weisen erfolgen, vorzugsweise mit einer Thermofixierung durch einen beheizbaren Stempel. Nach dem Zurückziehen des Stempels 161 werden die beiden Bahnen je um eine Nutzenlänge weitertransportiert. Separate Transporteinrichtungen für die beiden Bahnen ermöglichen es, das Stanzgut 154 und die Trägerbahn 155 entsprechend der jeweiligen Register mit unterschiedlichem Vorschub zu transportieren.

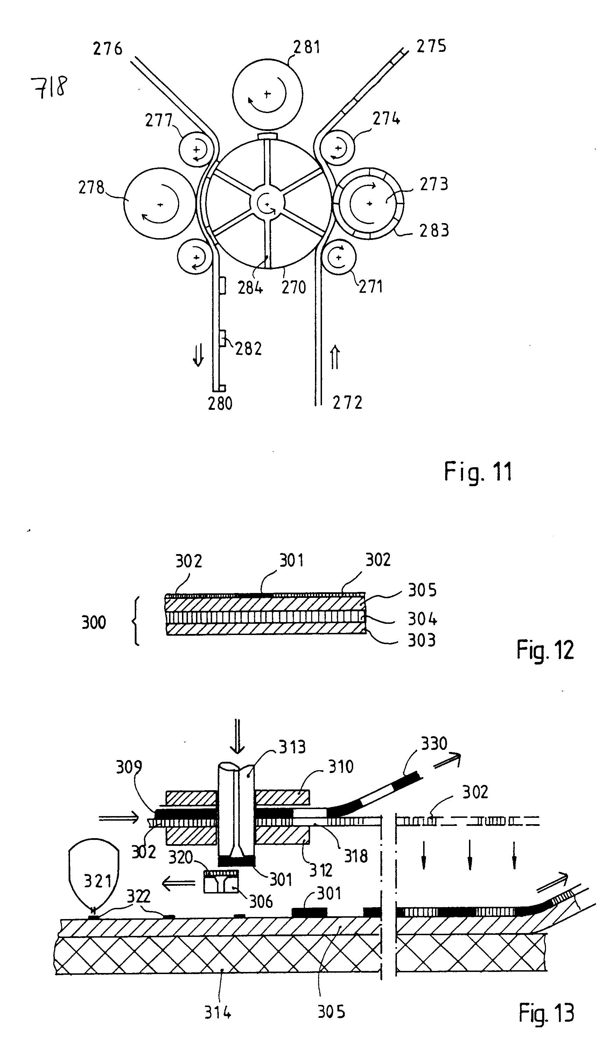

Ausführungsformen zur Variante II sind in den Fig. 9 und 10 gezeigt.

In einer ersten Ausführungsform ist der zugehörige Verfahrensablauf in Fig. 9 dargestellt, werden zwei Arbeitstische 72 und 75 verwendet. Der Tisch 72 ist als Stanzbett ausgelegt und befindet sich in einer Stanzeinrichtung. Der Tisch 75 dient als Klebetisch zum Verbinden der Elemente 73 mit dem Träger. Der Transfer der Elemente 73 vom Stanz- zum Klebetisch erfolgt mit Greifvorrichtungen. Besonders vorteilhaft ist es, die Greifköpfe mittels eines Handhabungsautomaten, eines Roboters oder ähnlichen computerunterstützten Maschinen durchzuführen, die den Transfer stereotyp und präzise durchführen.

Zu Verfahrensbeginn werden mittels Bogenanleger das Stanzgut 71 auf dem Tisch 72 und das Trägermaterial 77 auf dem Tisch 75 positioniert. Dann werden die Elemente 73 gestanzt. Erfindungsgemäß wird das Stanzen so durchgeführt, daß die Elemente 73 in ihrer Nutzenanordnung verbleiben. Anschließend faßt ein nicht gezeigter Greifer die Elemente 73 und überträgt sie entsprechend den dargestellten Pfeilen 74 positionsgerecht auf das im Tisch 75 liegende Trägermaterial. Hier werden die Einzelelemente 73 mit dem Trägermaterial 77 nach bereits bekannten Verfahren miteinander verbunden. Nach dem Abstapeln des Verbundbogens 79 und der Entsorgung des Verschnitts 78 sind die Einrichtungen wieder frei für den nächsten Verfahrenszyklus.

Eine zweite Ausführungsform der Variante II ist in Fig. 10 schematisch gezeigt. Auch in diesem Beispiel erfolgen das Stanzen und das Verbinden in zwei getrennten Arbeitsstationen. Das Stanzbett jedoch ist so ausgelegt, daß es gleichzeitig als Greifkopf und als Gegenlager für den Stanzstempel verwendet werden kann.

Das Stanzgut 71, das als Bahn oder Bogen zugeführt werden kann, wird mittels Positioniereinrichtungen auf dem Stanzbett 80 ausgerichtet, Ansaugöffnungen 87 dienen zur Fixierung des Stanzguts 71. Nach dem Stanzen mit dem Stempel 88 wird der als Gegendruckplatte ausgebildete Greifer 84 mitsamt dem fixierten Einzelelement 73 der zweiten Bearbeitungsstation zugeführt, wo das Element durch Lösen der Vakkumfixierung auf dem zweiten Tisch 81 in einer vorbestimmten Position abgelegt wird. Abschließend wird der Greifer wieder der Stanzmaschine zugeführt. Elektronisch gesteuerte oder computerunterstützte Handhabungsautomaten bieten die Möglichkeit, nacheinander gestanzte Elemente 73 in unterschiedlichen, vorausberechneten Positionen auf dem zweiten Tisch abzulegen. Es ist deshalb nicht notwendig, das Nutzenbild des Stanzguts 71 identisch zum Träger 77 auszulegen, vielmehr kann es in einer engen, den Verschnitt minimierenden Anordnung bedruckt werden. Die verschiedenen Wege 89 und 90, die der Greifer bei der Ablage der Elemente zurücklegt, sind in der Fig. 10 skizziert. Die Elemente 73 können direkt auf dem Tisch oder auch auf einem eingelegten und ausgerichteten Trägerbogen 77 abgelegt werden. Zum Verbinden der Elemente mit dem Träger sind auch hier wieder verschiedene, bereits erwähnte Techniken einsetzen.

Durch entsprechende Gestaltung der Werkzeuge und Greifer läßt sich das Verfahren auch so modifizieren, daß statt einem einzelnen Element auch Gruppen parallel verarbeitet werden können.

Ein Ausführungsbeispiel zur Variante III ist in Fig. 11 dargestellt, so ein Schema zum positionierten Aufbringen von Elementen auf ein Trägermaterial mittels einer erweiterten Rollenstanzmaschine gezeigt ist. Zentrale Einheit ist die als Stanz- und Fixierbett ausgebildete Gegendruckrolle 270, um die sich die verschiedenen Bearbeitungsstationen gruppieren. Entsprechend den Verfahrensschritten sind dies beispielsweise ein Bahnanleger 271 für das Rollenmaterial 272, eine Stanzvorrichtung 273, eine Verschnittentsorgung 274, ein weiterer Bahnanleger 277 für die Trägerbahn 276, ein Folienverbinder 278 zum Verbinden des Stanzguts mit dem Träger und ein Bahnableger 279 für das Abziehen der Verbundbahn 280.

Zur Durchführung des Verfahrens werden die Trägerfolie 272 und das Stanzgut 276 mit einer identischen Nutzenanordnung versehen. Dabei wird das Stanzbild vorzugsweise so ausgelegt, daß der Verschnitt eine zusammenhängende Gitterbahn 275 bildet. Das Stanzgut wird über einen Bahnanleger 271 registergerecht der Stanzvorrichtung zugeführt. Eine rotierende Stanzwalze 273 mit erhöht stehenden Messern 283 schneidet kontinuierlich die Elemente 282 aus dem Stanzgut. Zugleich mit dem Schnitt werden die Elemente auf der Gegendruckrolle 270 fixiert. Sie ist hierfür mit einer Vakuumsauganlage versehen. Die Ansaugkanäle 284 enden auf der Mantelfläche, sie sind entsprechend dem Nutzenbild des Stanzguts so angeordnet, daß ausschließlich die Elemente angesaugt werden. Mit der Drehung der Gegendruckrolle synchronisierte Ventile zwischen den Kanälen und der Saugpumpe aktivieren die Fixierung während des Ausstanzens.

Nach dem Passieren der Stanzvorrichtung laufen die auf der Gegendruckrolle 270 fixierten Elemente auf die Entsorgungsstation zu. Hier wird der Verschnitt 275 mittels eines Bahnablegers 274 in Form einer Gitterbahn abgehoben und beispielsweise auf einer Entsorgungsrolle aufgewickelt.

Als nächstes laufen die Elemente im gezeigten Beispiel auf eine Beschichtungsrolle 281 zu, die auf die freiliegende Oberfläche der Elemente 282 einen Klebstoff aufträgt.

Anschließend laufen die Elemente in den Folienverbinder ein. Hier wird über einen zweiten Bahnanleger die Trägerfolie 276 paßgerecht auf die Elemente 282 aufgelegt und beispielsweise zum Festigen der Klebeverbindung mit einer weiteren Rolle 278 angedrückt. Zugleich sorgt die Ventilsteuerung für ein Abschalten des Unterdrucks und ein Belüften der Ansaugkanäle 284. Jetzt kann die Verbundbahn mittels eines Bahnablegers von der Gegendruckrolle 270 abgehoben werden und einer weiteren Bearbeitungsstation oder einer Aufwickelvorrichtung zugeführt werden.

Die Fig. 12 zeigt ein Schnittbild durch eine kaschierte Ausweiskarte 300, wobei ein Unterschriftsstreifen 301 in einer Aussparung einer Ausgleichsfolie 302 eingebettet ist. Die Karte selbst hat einen herkömmlichen Schichtaufbau, bestehend aus den Folien 303, 304, 305. Die Folien bestehen üblicherweise aus thermoplastischen Kunststoffen, die durch Temperatur- und Druckeinwirkung miteinander verschweißbar sind. Die Ausgleichsfolie 302 und der Unterschriftsstreifen 301 weisen etwa die gleiche Dicke auf, so daß sich nach dem Kaschieren eine stufenlos ebene Oberfläche ergibt. Voraussetzung hierfür ist natürlich auch ein guter Formschluß zwischen Aussparung und Element.

Die Fig. 13 zeigt die Fertigungsschritte für ein formschlüssiges Stanzen von Ausgleichsfolie 302 und Element 301 sowie für das registergenaue Positionieren der beiden Materialien auf dem Träger 305. Die Transportbewegungen von Material und Bauteilen in den verschiedenen Arbeitsschritten sind durch Doppelpfeile symbolisch wiedergegeben. Das Verfahren, das auf verschiedenartigen Typen von Stanzmaschinen durchgeführt werden kann, wird im folgenden beispielhaft an einer Flachbettstanze dargestellt. Das Stanzbett besteht aus einer durchbrochenen Gegendruckplatte 312. Der Stanzstempel 313 weist eine Fixiervorrichtung für das gestanzte Element 301 in Form eines Vakuumsaugers auf. Unterhalb der Gegendruckplatte 312 befindet sich ein Arbeitstisch 314, in den der Träger 305 eingelegt wird. Die Materialien können der Stanze beliebig in Rollen- oder Bogenform zugeführt werden. Die Zuführung erfolgt mit nicht dargestellten Rollen oder Bogenanlegern in der Weise, daß im Stanzbett 312 die Ausgleichsfolie 302 und der Elementbogen 309 aufeinander liegen. Eine Deckplatte 310 sorgt für eine Fixierung des Stanzguts während des Stanzvorgangs.

Im ersten Schritt erfolgt das Stanzen der Elemente und der Ausgleichsfolie. Der sich abwärts bewegende Stempel 313 schneidet in einem Arbeitsgang aus den beiden eingelegten Materialien sowohl das Element 301 als auch die Aussparung 318 aus der Ausgleichsfolie 302 heraus. Nach dem Stanzen bleibt der Stempel 313, wie in der Fig. gezeigt, in einer vorbestimmten Mittenposition zwischen Gegendruckplatte 312 und Arbeitstisch 314 stehen. Das Element 301 ist während des Stanzvorgangs durch Einschalten des Unterdrucks am Stanzstempel fixiert worden. Das aus der Ausgleichsfolie 302 herausgeschnittene Stanzteil 320 kann sich vom Stanzstempel lösen und mit geeigneten Vorrichtungen 306 entsorgt werden.

Im nächsten Schritt wird das Element 301 auf dem Träger 305 angeheftet. In einem Vorbereitungsschritt hat der Träger eine Dosierstation 321 durchlaufen, in der im Register mit den Elementen lokal ein Haftvermittler 322 aufgetragen wird. Anschließend wird der Träger der Stanzeinrichtung zugeführt, sobald sie im Arbeitstisch 314 positioniert ist, fährt der Stanzstempel 313 in seine untere Endposition, hierdurch wird das Element 301 auf dem Träger aufgesetzt und angeheftet.

Der letzte Schritt besteht im Zusammenführen des Trägers 305 und des Ausgleichsgitters 302. Der Stanzstempel ist nach dem Abschalten der Vakuumansaugung in seine Anfangsposition zurückgekehrt, wodurch das Stanzgut der Maschine entnommen werden kann. Zur Wahrung der Paßgenaugigkeit werden sowohl das Stanzgut als auch der Träger in einem nicht dargestellten Transportsystem mit synchroner Vorschubtaktung auf dem Arbeitstisch 314 zusammengeführt. Während des Vorschubs wird das Papiergitter 330 mit einem nicht dargestellten Greifer vom Ausgleichsgitter abgehoben und entsorgt. Aufgrund des synchronen Vorschubs liegen auf dem Arbeitstisch 314 das Ausgleichsgitter 302 und die Elemente 301 registergenau auf dem Träger 305.

Die Formschlüssigkeit der Elemente und der Aussparungen ist durch das gemeinsame Stanzen gewährleistet. Der Schichtaufbau kann nun in weiteren Arbeitsschritten, wie beispielsweise durch Fixieren mit geheizten Nadeln, dauerhaft gemacht werden. Das so hergestellte Material kann als Halbzeug gelagert oder sofort zum Endprodukt weiterverarbeitet werden.

Die in Fig. 13 gezeigte Vorrichtung kann auch zur Herstellung eines Halbzeugs verwendet werden, bei dem die Elemente 301 in mit den Elementen gestanzten Aussparungen eines Bogens 302 fixiert sind. Dabei werden die Elemente 301 in einem ersten Schritt mit einer geringen Klebekraft mit einem Hilfsträger 305 verbunden. Nach dem Auflegen des passergenau mit den Elementen 301 gestanzten Bogens 302 auf den Hilfsträger 305 werden die Elemente beispielsweise an den Rändern durch geeignete Verfahren mit dem Bogen 302 fixiert.

Aufgrund der geringen Klebekraft zwischen den Elementen mit dem Hilfsträger kann das Halbzeug, bestehend aus den Elementen 301 und 302, vom Hilfsträger 305 abgelöst und beispielsweise auf eine Rolle zur Vorratshaltung aufgewickelt werden.

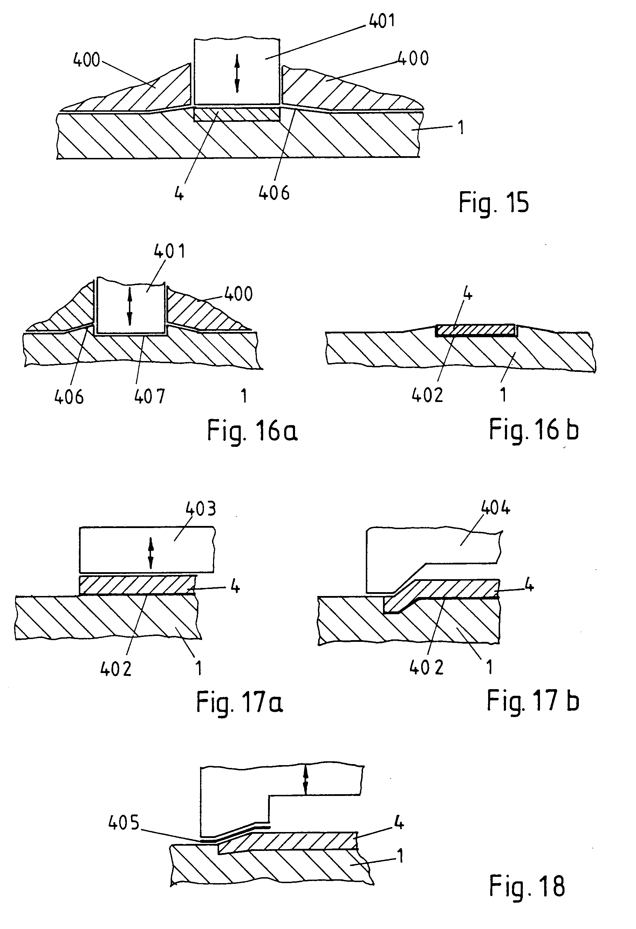

Die Fig. 14 zeigt eine Ausführungsform der Erfindung, bei der Bogenmaterial mit bereits vorgestanzten Elementen verarbeitet wird. Die Elemente 28 werden nur noch durch schmale Stege 28a im Stanzgut bzw. Bogen 26 gehalten. Zunächst werden der Bogen 26 und das Trägermaterial 27 auf den Tisch 22 befördert und auf diesem registergenau ausgerichtet. Daraufhin wird der vertikal bewegliche Tisch 22 mit den derauf befindlichen Bögen 26 und 27 gegen die Stempel 25 geführt, wobei die in diesem Ausführungsbeispiel vertikal bewegliche Gegendruckplatte 21 zunächst ebenfalls auf dem Bogen 26 aufliegt. Im nachfolgenden Schritt wird die Gegendruckplatte 21 angehoben, während die Stempel 25 in ihrer Position verbleiben. Da die Gegendruckplatte mit Hilfe integrierter Saugeinrichtungen 350 den Bogenverschnitt 37 mit anhebt, werden die Stege 28 durchtrennt, so daß schließlich nur die Elemente 28 auf dem Trägermaterial verbleiben. Der Verschnitt kann durch vertikales Absenken von Gegendruckplatte 21 und Tisch 22, nachdem das Trägermaterial 22 entfernt worden ist, entsorgt werden.

Die Verbindung der Elemente 28 mit dem Träger 27 kann mit einem Ultraschall-Schweißaggregat 351 vorgenommen werden, welches auf der dem Element 28 gegenüberliegenden Seite des Trägers 27 angeordnet ist. Die durch die Ultraschallenergie vorwiegend in der Grenzschicht zwischen Element und Träger entstehende Reibungswärme führt zu einer Verklebung der Elemente. Derartige Ultraschalleinrichtungen können selbstverständlich auch bei den anderen Verfahrensvarianten vorteilhaft eingesetzt werden.

In den Fig. 15 - 18 sind Ausführungsformen der Erfindung gezeigt, bei denen ein Unterschriftsstreifen auf ein fertiges Kartenlaminat nachträglich aufgebracht wurde.

Bei der Ausführungsform nach Fig. 15 wird der Unterschriftsstreifen 4 mit Hilfe beispielsweise eines Ultraschallstempels 401 in die erweichende Oberfläche der Karte gepreßt. In der Umgebung des Stempels sind Formteile 400 plaziert, die das aus dem Bereich des Unterschriftsstreifens verdrängte Kartenmaterial derart kanalisieren, daß sich im Randbereich des Unterschriftsstreifens 4 Verdickungen 406 ergeben, wodurch ein Dickensprung zwischen der Oberfläche des Streifens und der der Karte vermieden wird.

In den Fig. 16a, 16b ist eine Ausführungsform gezeigt, bei der der Kartenkörper beispielsweise auch mit einem Ultraschallstempel 401 und entsprechenden Formteilen 400 mit einer Vertiefung 407 versehen wird, wobei sich im Randbereich der Vertiefung wiederum Materialerhöhungen 406 ausbilden. In der Vertiefung wird daraufhin, wie in der Fig. 16b gezeigt, ein Unterschriftsstreifen mit Hilfe eines Klebers 402 mit dem Kartenkörper 1 verbunden.

In der in den Fig. 17a und 17b gezeigten Ausführungsform wird der mit einem Heißsiegelkleber 402 beschichtete Unterschriftsstreifen 4 zunächst unter Verwendung eines Heizstempels auf der Oberfläche des Kartenkörpers 1 fixiert. Wie die Fig. 17b zeigt, wird daraufhin in einem weiteren Verfahrensschritt der Randbereich des Streifens 4 mit einem entsprechend geformten Ultraschallstempel 404 in das Kartenmaterial gedrückt. Da bei dieser Verfahrensvariante die Menge des zu verdrängenden Kartenmaterials vergleichsweise gering ist, kann auf die in den Fig. 15 und 16 gezeigten Formteile verzichtet werden.

In Fig. 18 ist schließlich eine Ausführungsform gezeigt, bei der im Randbereich des Unterschriftsstreifens 4 ein zusätzliches Abdeckelement 405 vorgesehen ist. Dieses Element kann eine transparente oder auch bedruckte Folie sein, die beispielsweise im sogenannten Prägeverfahren aufgebracht wird. Mit diesem Element ist es möglich, den Unterschriftsstreifen in das allgemeine Erscheinungsbild der Karte einzubinden, was die Fälschungssicherheit des Unterschriftsstreifens und auch der Karte selbst weiter erhöht. Ein derartiges Sicherungselement kann auch bei der in der Fig. 15 oder 16b gezeigten Karte eingesetzt werden.

## Patentansprüche

1. Verfahren zum positionierten Aufbringen von flachen Stanzelementen auf die Oberfläche von Trägermaterial, insbesondere von Papierunterschriftsstreifen auf Kartendeckfolien, wobei die Elemente in Mehrfachnutzen vorliegen, dadurch **gekennzeichnet,** daß
a) die Mehrfachnutzen einer Stanzeinrichtung, bestehend aus einem bewegbaren Stanzbett (60, 80, 270) und einem Stanzstempel (68, 88, 273), zugeführt und in ihr positioniert werden,
b) die Elemente (52, 73, 282) einzeln oder in Gruppen gestanzt werden,
c) gleichzeitig mit dem Stanzvorgang eine Positionsfixierung der Elemente im Stanzbett erfolgt,
d) das Stanzbett nach dem Stanzen einer weiteren Bearbeitungsstation zugeführt werden, in der die fixierten Elemente mit einem Trägermaterial (53, 77, 276) zusammengeführt und verbunden werden.

2. Verfahren nach Anspruch 1, dadurch **gekennzeichnet,** daß
a) das Stanzbett als Vakuumgreifer (80) ausgeführt ist,
b) die Positionsfixierung der Elemente durch Anlegen eines Vakuums an den Vakuumgreifer erfolgt.

3. Verfahren nach Anspruch 2, dadurch **gekennzeichnet,** daß die Elemente von dem Vakuumgreifer auf ein zweites Bett übertragen und dort in einer vorbestimmten Position abgelegt werden.

4. Verfahren nach Anspruch 1, dadurch **gekennzeichnet,** daß
a) die Stanzeinrichtung eine Rollenstanzmaschine ist, die eine drehbare Gegendruckrolle (270) und eine drehbare Stanzwalze (273) aufweist,
b) die auf der Gegendruckrolle (270) fixierten Elemente auf einer Kreisbahn der weiteren Bearbeitungsstation zugeführt werden.

5. Verfahren zum positionierten Aufbringen von Unterschriftsstreifen auf die Oberfläche von Trägermaterial, **gekennzeichnet** durch folgende Schritte:
a) Auswahl eines in Mehrnutzenanordnung mit Unterschriftsstreifen bedruckten Papierbogens oder Papierbandes
b) Zuführen des Bogen oder Bandes zu einer Stanzeinrichtung, bestehend aus einem Stanzstempel und einem zweigeteilten Stanzbett, und Positionieren des Bogens oder Bandes entsprechend den aufgedruckten Unterschriftsstreifen
c) Stanzen der Unterschriftsstreifen einzeln oder in Gruppen
d) Positionsfixierung der Unterschriftsstreifen auf dem Trägermaterial im Stanzbett gleichzeitig mit dem Stanzvorgang
e) Verbinden der fixierten Unterschriftsstreifen mit dem Trägermaterial.

6. Verfahren nach einem der Ansprüche 1 - 5, dadurch **gekennzeichnet**, daß zwischen dem Stanzen und dem Verbinden in den Verfahrensablauf weitere Bearbeitungsschritte eingefügt werden, wie Auftragen einer Kleberschicht, Bedrucken der Elemente und/oder des Trägermaterials.

7. Verfahren nach Anspruch 6, dadurch **gekennzeichnet,** daß die Verbindung der Elemente mit dem Trägermaterial durch Klebetechniken erfolgt, wie Thermofixierung, Auftrag eines Klebers auf das Trägermaterial und/oder die Elemente oder durch Verwendung von selbstklebenden oder thermisch aktivierbaren Klebermischungen auf den Nutzenbogen und/oder dem Trägermaterial durchgeführt wird.

8. Verfahren nach Anspruch 6, dadurch **gekennzeichnet,** daß die Elemente mit Hilfe eines in der Stanz- und Positioniervorrichtung integrierten Ultraschallschweißaggregats mit dem Trägermaterial verbunden werden.

9. Verfahren nach einem der Ansprüche 1 - 5, dadurch **gekennzeichnet,** daß mit dem Stanzen der Elemente im gleichen Arbeitsgang formschlüssige Dickenausgleichelemente gestanzt und auf dem Trägermaterial zusammengeführt werden.

10. Verfahren nach einem der Ansprüche 1 - 5, dadurch **gekennzeichnet,** daß die Mehrfachnutzen und das Trägermaterial in Form von Bahnen und/oder Bogen vorliegen.

11. Vorrichtung zum positionierten Aufbringen von flachen Stanzelementen (52, 73) auf die Oberfläche von Trägermaterial (53, 77, 276), insbesondere von Papierunterschriftsstreifen auf Kartendeckfolien, wobei die Elemente in Mehrfachnutzen vorliegen, **gekennzeichnet** durch
a) eine Zuführeinrichtung zum registergenauen Positionieren von Mehrfachnutzen in einer Stanzeinrichtung,
b) die Stanzeinrichtung aus einem bewegbaren Stanzbett (60, 80, 270) besteht, das eine Einrichtung zur Positionsfixierung der Elemente am Stanzbett und einen Stanzstempel (68, 88, 273) aufweist,
c) eine weitere Bearbeitungsstation, in welcher die Elemente mit dem Trägermaterial (53, 77, 276) zusammengeführt und vom Stanzbett gelöst werden.

12. Vorrichtung nach Anspruch 11, dadurch **gekennzeichnet,** daß das Stanzbett als Vakuumgreifer ausgeführt ist.

13. Vorrichtung nach Anspruch 11, dadurch **gekennzeichnet,** daß die Stanzeinrichtung eine Rollenstanzmaschine, bestehend aus einer drehbaren Gegendruckrolle (270) und einer drehbaren Stanzwalze (273), ist.

14. Vorrichtung nach einem der Ansprüche 11 oder 12, **gekennzeichnet** durch eine zusätzliche Abzugsvorrichtung zum Entfernen des Schnittes von Trägermaterial.

## Claims

1. A method for applying flat punched elements in the desired position to the surface of a carrier material, in particular signature stripes made of paper to the cover films of cards, the elements being present in multiple copies on a sheet, characterized by the steps of
a) feeding the multiple copies to a punching device comprising a movable punch bed (60, 80, 270) and a die (68, 88, 273), and positioning them therein,
b) punching the elements (52, 3, 282) individually or in groups,
c) fixing the position of the elements in the punch bed at the same time as the punching process,
d) feeding the punch bed after punching to a further processing unit where the fixed elements are brought together with a carrier material (53, 77, 276) and bonded.

2. The method of claim 1, characterized in that
a) the punch bed is designed as a vacuum gripper (80),
b) the position of the elements is fixed by applying a vacuum to the vacuum gripper.

3. The method of claim 2, characterized in that the elements are transferred by the vacuum gripper to a second bed and deposited there in a predetermined position.

4. The method of claim 1, characterized in that
a) the punching device is a roller type punching machine having a rotatable back pressure roller (270) and a rotatable punch roll (273),
b) the elements fixed on the back pressure roller (270) are fed to the further processing unit on a circular path.

5. A method for applying signature stripes in the desired position to the surface of a carrier material, characterized by the steps of
a) selecting a paper sheet or paper strip printed with signature stripes in multiple copies,
b) feeding the sheet or strip to a punching device comprising a die and a bipartite punch bed, and positioning the sheet or strip in accordance with the printed signature stripes,
c) punching the signature stripes individually or in groups,
d) fixing the position of the signature stripes on the carrier material in the punch bed at the same time as the punching process,
e) bonding the fixed signature stripes with the carrier material.

6. The method of any of claims 1 to 5, characterized in that further processing steps are added to the process sequence between punching and bonding, e.g. for applying an adhesive layer, printing the elements and/or the carrier material.

7. The method of claim 6, characterized in that the elements are bonded with the carrier material by bonding techniques such as thermofixing, applying an adhesive to the carrier material and/or the elements or using self-adhesive or thermally activated adhesive mixtures on the sheets of copies and/or the carrier material.

8. The method of claim 6, characterized in that the elements are bonded with the carrier material with the aid of an ultrasonic welding set integrated into the punching and positioning device.

9. The method of any of claims 1 to 5, characterized in that formfitting thickness compensating elements are punched in the same working step as the punching of the elements, and brought together on the carrier material.

10. The method of any of claims 1 to 5, characterized in that the multiple copies and the carrier material are present in the form of webs and/or sheets.

11. An apparatus for applying flat punched elements (52, 73) in the desired position to the surface of a carrier material (53, 77, 276), in particular signature stripes made of paper to the cover films of cards, the elements being present in multiple copies on a sheet, characterized by
a) a feeding device for positioning multiple copies in a punching device in exact register,
b) the punching device comprising a movable punch bed (60, 80, 270) having means for fixing the position of the elements on the punch bed, and a die (68, 88, 273),
c) a further processing unit where the elements are brought together with the carrier material (53, 77, 276) and detached from the punch bed.

12. The apparatus of claim 11, characterized in that the punch bed is designed as a vacuum gripper.

13. The apparatus of claim 11, characterized in that the punching device is a roller type stamping machine comprising a rotatable back pressure roller (270) and a rotatable punch roll (273).

14. The apparatus of either of claims 11 and 12, characterized by an additional removing device for removing the cut from the carrier material.

## Revendications

1. Procédé d'application en position d'éléments matricés plats sur la surface de matériau de support, en particulier de rubans de signature en papier sur des feuilles de couverture de carte, les éléments se présentant en flans imprimés multiples, caractérisé en ce que
a) les flans imprimés multiples sont amenés à un organe de découpage, se composant d'un plateau de découpage mobile (60, 80, 270) et d'un poinçon de découpage (68, 88, 273), et y sont positionnés,
b) les éléments (52, 73, 282) sont découpés isolément ou en groupes,
c) en même temps que le processus de découpage, on effectue une fixation en position des éléments sur le plateau de découpage,
d) après le découpage, le plateau de découpage est amené à un autre poste de traitement, dans lequel les éléments fixés sont groupés avec un matériau de support (53, 77, 276) et sont réunis.

2. Procédé selon la revendication 1, caractérisé en ce que
a) le plateau de découpage est réalisé sous la forme d'un organe (80) de maintien par dépression,
b) la fixation en position des éléments est réalisée par établissement d'une dépression dans l'organe de maintien par dépression.

3. Procédé selon la revendication 2, caractérisé en ce que les éléments sont transférés par l'organe de maintien par dépression sur un second plateau et y sont déposés dans une position prédéterminée.

4. Procédé selon la revendication 1, caractérisé en ce que
a) l'organe de découpage est une machine de découpage à rouleaux, qui comporte un rouleau rotatif à contre-pression (270) et un cylindre rotatif de découpage (273),
b) les éléments fixés sur le rouleau à contrepression (270) sont amenés par un trajet circulaire à l'autre poste de traitement.

5. Procédé d'application en position des rubans de signatures sur la surface d'un matériau de support, caractérisé par les étapes suivantes consistant:
a) à choisir une bande de papier ou une feuille de papier imprimée de rubans de signatures parmi un agencement de flancs imprimés multiples,
b) à amener la bande ou feuille à un organe de découpage se composant d'un poinçon de découpage et d'un plateau de découpage partagé en deux parties, et à positionner la bande ou la feuille en correspondance aux rubans de signatures imprimés,
c) à découper les rubans de signatures isolément ou en groupes,
d) à fixer en position le ruban de signature sur le matériau de support dans le plateau de découpage simultanément au processus de découpage,
e) à relier au matériau de support le ruban de signatures fixé.

6. Procédé selon l'une des revendications 1 à 5, caractérisé en ce qu'on introduit dans le déroulement du procédé, entre le découpage et la liaison, d'autres étapes de traitement , telles que le dépôt d'une couche d'adhésif, l'impression des éléments et/ou du matériau de support.

7. Procédé selon la revendication 6, caractérisé en ce que la liaison des éléments au matériau de support est réalisée par des techniques de collage, comme le thermofixage, le dépôt d'un adhésif sur le matériau de support et/ou les éléments ou par l'emploi de mélanges de colles auto adhésifs ou susceptibles d'être rendus actifs par chauffage sur la feuille de flancs imprimés et/ou sur le matériau de support.

8. Procédé selon la revendication 6, caractérisé en ce que les éléments sont liés au matériau de support au moyen d'un bloc de soudure aux ultrasons intégré à l'organe de découpage et de positionnement.

9. Procédé selon l'une des revendications 1 à 5, caractérisé en ce qu'au cours du découpage des éléments, on découpe dans la même phase de travail des éléments de compensation d'épaisseur à verrouillage de forme et on les associe au matériau de support.

10. Procédé selon l'une des revendications 1 à 5, caractérisé en ce que les flans imprimés multiples et le matériau de support se présentent sous la forme de rubans et/ou de feuilles.

11. Dispositif d'application en position d'éléments estampés plans (52, 73) sur la surface d'un matériau de support (53, 77, 276), notamment de rubans de signatures en papier sur des feuilles de couverture de carte, ces éléments étant des flans imprimés multiples, caractérisé par
a) un organe d'amenée pour la mise en place de façon précise de flans imprimés multiples dans un organe de découpage,
b) l'organe de découpage se compose d'un plateau mobile de découpage (60, 80, 270), qui comporte un dispositif pour la fixation en position des éléments sur le plateau de découpage et d'un poinçon de découpage (68, 88, 273),
c) un autre poste de travail dans lequel les éléments sont associés au matériau de support (53, 77, 276) et sont séparés du plateau de découpage.

12. Dispositif selon la revendication 11, caractérisé en ce que le plateau de découpage est réalisé sous la forme d'un organe de maintien (80) par dépression.

13. Dispositif selon la revendication 11, caractérisé en ce que l'organe de découpage est une machine de découpage à rouleaux, qui se compose d'un rouleau rotatif à contre-pression (270) et d'un cylindre de découpage rotatif (273).

14. Dispositif selon l'une des revendications 11 ou 12, caractérisé par un organe additionnel de reprise pour la séparation des coupes du matériau de support.
